# EUROPÄISCHE PATENTSCHRIFT

(11) **EP 1 928 703 B1**
(45) Veröffentlichungstag und Bekanntmachung des Hinweises auf die Patenterteilung: **27.02.2013**
(21) Anmeldenummer: 06806739.6
(22) Anmeldetag: 01.09.2006
(51) Int. Cl.: B60R 16/03, G06F 13/40

(54) **STEUERGERÄT MIT RECHENGERÄT UND PERIPHERIEBAUSTEIN, DIE ÜBER EINEN SERIELLEN MEHRDRAHTBUS MITEINANDER IN VERBINDUNG STEHEN**
CONTROL DEVICE WITH A COMPUTING DEVICE AND A PERIPHERAL MODULE, WHICH ARE INTERCONNECTED VIA A SERIAL MULTIWIRE BUS
DISPOSITIF DE COMMANDE COMPRENANT UN DISPOSITIF DE CALCUL ET UN MODULE PERIPHERIQUE INTERCONNECTES PAR UN BUS SERIE MULTIFILAIRE

(30) Priorität: 07.09.2005 DE 102005042493
(43) Veröffentlichungstag der Anmeldung: 11.06.2008
(73) Patentinhaber: ROBERT BOSCH GMBH, 70442 Stuttgart (DE)
(72) Erfinder: KNEER, Andreas, 73240 Wendlingen (DE); AUE, Axel, 70825 Muenchingen (DE)
(86) Internationale Anmeldenummer: PCT/EP2006/065909
(87) Internationale Veröffentlichungsnummer: WO 2007/028771

(56) Entgegenhaltungen:
- DE-A1- 19 611 942
- DE-A1- 19 611 944

## Beschreibung

Die vorliegende Erfindung betrifft ein Steuergerät, das mindestens ein Rechengerät und mindestens einen separaten mit dem Rechengerät über einen seriellen Mehrdrahtbus in Verbindung stehenden Peripheriebaustein mit mindestens einer Endstufe zur Weitergabe von seriellen Daten an Mittel zur Realisierung der Kraftfahrzeugfunktion aufweist.

### Stand der Technik

Aus dem Stand der Technik sind insbesondere im Kraftfahrzeugbereich einfach aufgebaute und kostengünstige Steuergeräte bekannt. Diese Steuergeräte dienen zur Steuerung und/oder Regelung von Kraftfahrzeugfunktionen, beispielsweise der Funktion einer Brennkraftmaschine. Diese bekannten Steuergeräte umfassen zwei integrierte Schaltkreise (sog. integrated circuits), nämlich einem Baustein für ein Rechengerät oder Mikrocontroller und einem Peripheriebaustein oder Peripherie Chip. Auf dem Peripheriebaustein sind unter anderem eine Spannungsversorgung, eine oder mehrere Endstufen und Schnittstellenbausteine des Steuergeräts untergebracht.

Das Rechengerät und der Peripheriebaustein kommunizieren nach dem Stand der Technik über einen sogenannten Mikrosekunden Bus ( s-Bus) miteinander. Dieser Bus ist beispielsweise aus der Patentanmeldung DE 19733748 A1 bekannt Es handelt sich dabei um einen seriellen Bus mit etwa üblicherweise 3 bis oder 4 Leitungen. Dieser Bus hat Ähnlichkeit mit einem SPI (Serial Peripheral Interface)-Bus. Über den Mikrosekunden Bus findet unter anderem eine Sicherheitskommunikation (zum Beispiel eine Frage-Antwort-Kommunikation) zwischen dem Rechengerät und dem Peripheriebaustein statt. Außerdem sind zwischen dem Rechengerät und dem Peripheriebaustein weitere Leitungen, beispielsweise zur Spannungsversorgung des Rechengeräts, vorgesehen.

Das Rechengerät des bekannten Steuergeräts verfügt außerdem über eine sogenannte UART (Universal Asynchronous Receiver Transmitter)-Schnittstelle, über die serielle Daten über eine weitere Leitung zu dem Peripheriebaustein übertragen werden, von wo aus sie über die Endstufe des Peripheriebausteins an Mittel außerhalb des Steuergeräts weitergeleitet werden. Das sind beispielsweise Mittel zur Realisierung der zu steuernden bzw. zu regelnden Funktion des Kraftfahrzeugs. Insbesondere sind diese Mittel beispielsweise Sensoren, ein Diagnosetester, eine Wegfahrsperre, etc.

Die Patentanmeldung DE 196 11 942 A1 beschreibt einen Halbleiterschaltkreis mit einem Peripheriebaustein, welcher eine SPI-Schnittstelle und einen Transceiver mit einer Endstufe aufweist, wobei über die SPI-Schnittstelle beispielsweise von einem Mikrocontroller ein Signal zur Betriebsartensteuerung, beispielsweise zwischen einem NORMAL- und einem SLEEP-Modus, an die Endstufe übertragen werden kann.

Nachteilig bei den bekannten Steuergeräten ist die Tatsache, dass zwischen dem Rechengerät und dem Peripheriegerät eine separate Leitung für die Kommunikation über die UART-Schnittstelle vorgesehen werden muss. Diese muss zudem an einem gesonderten Pin des Peripheriebausteins angeschlossen werden, wodurch sich die Anzahl der an dem Peripheriebaustein verfügbaren Pins verringert. Aus Kostengründen sollte die Anzahl der an dem Peripheriebaustein benötigten Pins jedoch möglichst klein gehalten werden.

Ausgehend von diesem Stand der Technik liegt der vorliegenden Erfindung die Aufgabe zugrunde, eine Möglichkeit zu schaffen, die Anzahl der an einem Peripheriebaustein erforderlichen Pins möglichst gering zu halten, um dadurch Kosten für das gesamte Steuergerät reduzieren zu können.

Zur Lösung dieser Aufgabe wird ausgehend von dem Steuergerät der eingangs genannten Art vorgeschlagen, dass der Peripheriebaustein zwischen einer Schnittstelle für den seriellen Mehrdrahtbus und der Endstufe eine asynchrone Eindrahtschnittstelle aufweist.

### Vorteile der Erfindung

Die Schnittstelle für den seriellen Mehrdrahtbus ist vorzugsweise als eine Mikrosekunden- oder eine SPI-Schnittstelle ausgebildet. Die asynchrone Eindrahtschnittstelle ist vorzugsweise als eine UART-Schnittstelle ausgebildet. Aufgrund dieser zusätzlich in dem Peripheriebaustein vorgesehenen Schnittstelle können für die Endstufe und die Weiterleitung an externe Mittel außerhalb des Steuergeräts vorgesehene Daten über den bereits vorhandenen seriellen Mehrdrahtbus übertragen werden. Die diese Daten transportierenden Signale werden nach dem Eingang in dem Peripheriegerät über die serielle Mehrdrahtbus-Schnittstelle in der asynchronen Eindrahtschnittstelle in entsprechende Signale für die Endstufe umgewandelt und an diese weitergeleitet. Die Endstufe bemerkt keinen Unterschied zum Stand der Technik, da sie wie bisher auch Signale von einer UART-Schnittstelle oder einer anderen Art von asynchroner Eindrahtschnittstelle erhält.

Besonders vorteilhaft ist, dass mit der vorliegenden Erfindung die Leitung zwischen der UART-Schnittstelle in dem Rechengerät und dem Peripheriegerät eingespart werden kann. Mindestens ebenso wichtig ist, dass zudem ein Pin an dem Peripheriebaustein eingespart werden kann. Der an dem Peripheriebaustein frei gewordene Pin kann nun für andere Aufgaben oder Funktionen benutzt werden. Alternativ kann bei gleichem Aufgaben- bzw. Funktionsumfang auch ein billigerer Peripheriebaustein mit einem Pin weniger in dem Steuergerät eingesetzt werden.

Die Unteransprüche haben vorteilhafte Ausgestaltungen der vorliegenden Erfindung zum Inhalt.

### Zeichnungen

Die vorliegende Erfindung wird nachfolgend anhand der Figuren näher erläutert. Der Figurenbeschreibung können zusätzliche Merkmale und Vorteile der Erfindung entnommen werden. Es zeigen:
- Figur 1: ein erfindungsgemäßes Steuergerät in schematischer Ansicht; und
- Figur 2: ein aus dem Stand der Technik bekanntes Steuergerät.

### Beschreibung der Ausführungsbeispiele

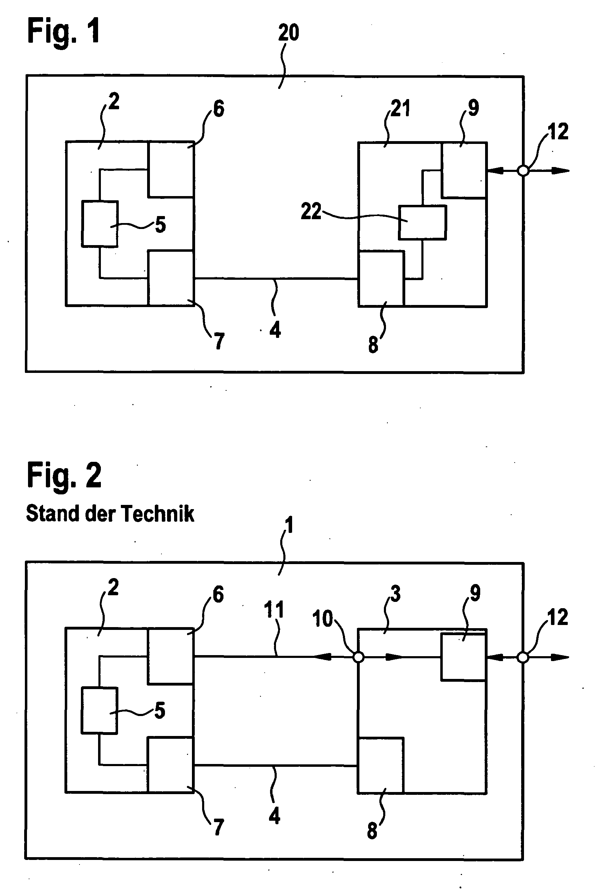

In Figur 2 ist ein aus dem Stand der Technik bekanntes Steuergerät in seiner Gesamtheit mit dem Bezugszeichen 1 bezeichnet. Das Steuergerät 1 dient vorzugsweise zur Steuerung und/oder Regelung von Funktionen in einem Kraftfahrzeug, beispielsweise zur Steuerung einer Brennkraftmaschine. Das Steuergerät 1 weist mindestens ein Rechengerät 2 und mindestens einen separaten Peripheriebaustein 3 auf. In Figur 2 ist beispielhaft jeweils nur ein Rechengerät 2 und nur ein Peripheriebaustein 3 dargestellt. Das Rechengerät 2 kann auch als Mikrocontroller bezeichnet werden Das Rechengerät 2 steht über einen seriellen Mehrdrahtbus 4, der beispielsweise als ein Mikrosekunden Bus ausgebildet ist, in Verbindung mit dem Peripheriebaustein 3.

Das Rechengerät 2 umfasst einen Rechenkern 5, der auch als Central Processing Unit (CPU) bezeichnet werden kann. Außerdem weist das Rechengerät 2 eine serielle, asynchrone Eindrahtschnittstelle 6 auf, die beispielsweise als eine UART (Universal Asynchronous Receiver Transmitter)-Schnittstelle ausgebildet ist. Schließlich umfasst das Rechengerät 2 auch eine Schnittstelle 7 für den seriellen Mehrdrahtbus 4.

Auf Seiten des Peripheriebausteins 3 ist ebenfalls eine Schnittstelle 8 für den seriellen Mehrdrahtbus 4 und mindestens eine Endstufe 9 vorgesehen. Von den Endstufen 9 ist in Figur 2 lediglich eine beispielhaft dargestellt. Die Endstufe 9 dient zum Hochsetzen eines vom Rechengerät 2 ankommenden Signals auf eine Batteriespannung in dem Fahrzeug. Außerdem umfasst der Peripheriebaustein 3 eine Mehrzahl von Anschlüssen oder Pins, von denen in Figur 2 ein Pin 10 beispielhaft dargestellt ist. Über den Pin 10 und eine Leitung 11 ist die asynchrone Eindrahtschnittstelle 6 des Rechengeräts 2 an den Peripheriebaustein 3 bzw. an die Endstufe 9 angeschlossen. Der Peripheriebaustein 3 weist außerdem Schnittstellen des Steuergeräts 1 nach außen, also aus dem Steuergerät 1 heraus hin zu externen Mitteln, auf. Externe Mittel sind beispielsweise Sensoren, Diagnosetester oder eine Wegfahrsperre. Von diesen Schnittstellen ist in Figur 2 lediglich eine Schnittstelle 12 beispielhaft dargestellt.

Steuergeräte 1 der in Figur 2 dargestellten Art sind einfach aufgebaut und kostengünstig und werden insbesondere im Kraftfahrzeugbereich eingesetzt. Nachteilig bei diesen bekannten Steuergeräten 1 ist die Tatsache, dass zwischen dem Rechengerät 2 und dem Peripheriegerät 3 die separate Leitung 11 für die Kommunikation über die serielle asynchrone Eindrahtschnittstelle 6 vorgesehen werden muss. Diese muss zudem an dem gesonderten Pin 10 des Peripheriebausteins 3 angeschlossen werden, wodurch sich die Anzahl der an dem Peripheriebaustein 3 verfügbaren Pins 10 verringert.

In Figur 1 ist ein erfindungsgemäßes Steuergerät 20 dargestellt, das einen Peripheriebaustein 21 aufweist, der zusätzlich zu den Bauteilen des Peripheriebausteins 3 des bekannten Steuergeräts 1 eine serielle asynchrone Eindrahtschnittstelle 22 aufweist, die beispielsweise als eine UART-Schnittstelle ausgebildet ist. Die asynchrone Eindrahtschnittstelle 6 ist zwischen der Schnittstelle 8 für den seriellen Mehrdrahtbus 4 und der Endstufe 9 angeordnet. Mit der Erfindung kann die Anzahl der an dem Peripheriebaustein 21 erforderlichen Pins gering gehalten werden, um dadurch die Kosten für das gesamte Steuergerät 20 zu reduzieren.

Aufgrund dieser zusätzlich in dem Peripheriebaustein 21 vorgesehenen Schnittstelle 22 können für die Endstufe 9 und die Weiterleitung an externe Mittel außerhalb des Steuergeräts 20 vorgesehene Daten über den bereits vorhandenen seriellen Mehrdrahtbus 4 übertragen werden. Die diese Daten transportierenden Signale werden nach dem Eingang in dem Peripheriegerät 21 über die serielle Mehrdrahtbus-Schnittstelle 8 in der asynchronen Eindrahtschnittstelle 22 in entsprechende Signale für die Endstufe 9 umgewandelt und an diese weitergeleitet. Die Endstufe 9 bemerkt keinen Unterschied zum Stand der Technik, da sie wie bisher auch Signale von einer UART-Schnittstelle erhält, und zwar von der UART-Schnittstelle 22 des Peripheriebausteins 22 anstatt - wie beim Stand der Technik - von der UART-Schnittstelle 6 des Rechengeräts 2.

Besonders vorteilhaft ist, dass mit der vorliegenden Erfindung die Leitung 11 zwischen der UART-Schnittstelle 6 in dem Rechengerät 2 und dem Peripheriegerät 21 eingespart werden kann. Mindestens ebenso wichtig ist, dass zudem der Pin 10 an dem Peripheriebaustein 21 eingespart werden kann. Der an dem Peripheriebaustein 21 frei gewordene Pin kann nun für andere Aufgaben oder Funktionen benutzt werden. Alternativ kann bei gleichem Aufgaben- bzw. Funktionsumfang auch ein billigerer Peripheriebaustein 21 mit einem Pin weniger in dem Steuergerät 20 eingesetzt werden.

## Patentansprüche

1. Steuergerät (20), das mindestens ein Rechengerät (2) und mindestens einen separaten mit dem Rechengerät (2) über einen seriellen Mehrdrahtbus (4) in Verbindung stehenden Peripheriebaustein (21) mit mindestens einer Endstufe (9) zur Weitergabe von seriellen Daten an Mittel außerhalb des Steuergeräts (20) aufweist, **dadurch gekennzeichnet, dass** der Peripheriebaustein (21) zwischen einer Schnittstelle (8) für den seriellen Mehrdrahtbus (4) und der Endstufe (9) eine asynchrone Eindrahtschnittstelle (22) aufweist, wobei zur Weitergabe an Mittel außerhalb des Steuergerätes (20) vorgesehene serielle Daten über den seriellen Mehrdrahtbus (4) und die Schnittstelle (8) an die Endstufe (9) übertragen werden können.

2. Steuergerät (20) nach Anspruch 1, **dadurch gekennzeichnet, dass** der Peripheriebaustein eine Spannungsversorgung für das Steuergerät (20) und/oder Schnittstellen (12) für das Steuergerät (20) nach außen aufweist.

3. Steuergerät (20) nach Anspruch 1 oder 2, **dadurch gekennzeichnet, dass** die asynchrone Eindrahtschnittstelle (22) als eine UART (Universal Asynchronous Receiver Transmitter)-Schnittstelle ausgebildet ist.

4. Steuergerät (20) nach einem der Ansprüche 1 bis 3,
**dadurch gekennzeichnet, dass** der serielle Mehrdrahtbus (4) als ein Mikrosekunden-Bus ausgebildet ist.

5. Steuergerät (20) nach einem der Anspruche 1 bis 3,
**dadurch gekennzeichnet, dass** der serielle Mehrdrahtbus (4) als ein SPI (Serial Peripheral Interface)-Bus ausgebildet ist.

6. Steuergerät (20) nach einem der Anspruche 1 bis 5,
**dadurch gekennzeichnet, dass** der Peripheriebaustein (21) Mittel aufweist, um ein für den Betrieb der asynchronen Eindrahtschnittstelle (22) erforderliches Taktsignal von dem Takt des seriellen Mehrdrahtbusses (4) abzuleiten.

7. Steuergerät (20) nach einem der Ansprüche 1 bis 6,
**dadurch gekennzeichnet, dass** das Steuergerät (20) zur Steuerung und/oder Regelung mindestens einer Funktion in einem Kraftfahrzeug dient.

## Claims

1. Control unit (20) which has at least one arithmetic unit (2) and at least one separate peripheral chip (21) that is connected to the arithmetic unit (2) by means of a serial multiwire bus (4) and that has at least one output stage (9) for forwarding serial data to means outside the control unit (20), **characterized in that** the peripheral chip (21) has an asynchronous single-wire interface (22) between an interface (8) for the serial multiwire bus (4) and the output stage (9), wherein serial data intended to be forwarded to means outside the control unit (20) can be transmitted to the output stage (9) via the serial multiwire bus (4) and the interface (8).

2. Control Unit (20) according to Claim 1, **characterized in that** the peripheral chip has a power supply for the control unit (20) and/or interfaces (12) for the control unit (20) to the outside.

3. Control Unit (20) according to Claim 1 or 2, **characterized in that** the asynchronous single-wire interface (22) is in the form of a UART (Universal Asynchronous Receiver Transmitter) interface.

4. Control Unit (20) according to one of Claims 1 to 3, **characterized in that** the serial multiwire bus (4) is in the form of a microsecond bus.

5. Control Unit (20) according to one of Claims 1 to 3, **characterized in that** the serial multiwire bus (4) is in the form of an (SPI) (Serial Peripheral Interface) bus.

6. Control Unit (20) according to one of Claims 1 to 5, **characterized in that** the peripheral chip (21) has means for deriving a clock signal which is required for operation of the asynchronous single-wire interface (22) from the clock of the serial multiwire bus (4).

7. Control Unit (20) according to one of Claims 1 to 6, **characterized in that** the Control Unit (20) is used for controlling and/or regulating at least one function in a motor vehicle.

## Revendications

1. Unité de contrôle (20), qui présente au moins un calculateur (2) et au moins composant périphérique (21), relié séparément avec le calculateur (21) par le biais d'un bus multifilaire série (4) et comprenant au moins un étage final (9) pour le transfert de données série vers des moyens à l'extérieur de l'unité de contrôle (20), **caractérisé en ce que** le composant périphérique (21) présente une interface unifilaire asynchrone (22) entre une interface (8) pour le bus multifilaire série (4) et l'étage final (9), des données série prévues pour être transférées à des moyens à l'extérieur de l'unité de contrôle (20) pouvant être transmises à l'étage final (9) par le biais du bus multifilaire série (4) et de l'interface (8).

2. Unité de contrôle (20) selon la revendication 1, **caractérisé en ce que** le composant périphérique présente une alimentation électrique pour l'unité de contrôle (20) et/ou des interfaces (12) pour l'unité de contrôle (20) vers l'extérieur.

3. Unité de contrôle (20) selon la revendication 1 ou 2, **caractérisé en ce que** l'interface unifilaire asynchrone (22) est réalisée sous la forme d'une interface UART (Universal Asynchronous Receiver Transmitter - Émetteur-récepteur asynchrone universel).

4. Unité de contrôle (20) selon l'une des revendications 1 à 3, **caractérisé en ce que** le bus multifilaire série (4) est réalisé sous la forme d'un bus µSB.

5. Unité de contrôle (20) selon l'une des revendications 1 à 3, **caractérisé en ce que** le bus multifilaire série (4) est réalisé sous la forme d'un bus SPI (Serial Peripheral Interface - Interface périphérique série).

6. Unité de contrôle (20) selon l'une des revendications 1 à 5, **caractérisé en ce que** le composant périphérique (21) présente des moyens pour dériver un signal d'horloge nécessaire au fonctionnement de l'interface unifilaire asynchrone (22) de l'horloge du bus multifilaire série (4).

7. Unité de contrôle (20) selon l'une des revendications 1 à 6, **caractérisé en ce que** l'unité de contrôle (20) sert à la commande et/ou à la régulation d'au moins une fonction dans un véhicule automobile.
